# EUROPÄISCHE PATENTSCHRIFT

(11) **EP 3 010 737 B1**
(45) Veröffentlichungstag und Bekanntmachung des Hinweises auf die Patenterteilung: **09.08.2017**
(21) Anmeldenummer: 14732821.5
(22) Anmeldetag: 17.06.2014
(51) Int. Cl.: B60H 1/00, G08C 17/02

(54) **VERFAHREN ZUM FERNAKTIVIEREN EINER FUNKTION EINES KRAFTFAHRZEUGS UND COMPUTERPROGRAMMPRODUKT**
METHOD FOR THE REMOTE ACTIVATION OF A FUNCTION OF A MOTOR VEHICLE AND COMPUTER PROGRAM PRODUCT
PROCÉDÉ D'ACTIVATION À DISTANCE D'UNE FONCTION D'UN VÉHICULE À MOTEUR ET PRODUIT-PROGRAMME INFORMATIQUE

(30) Priorität: 21.06.2013 DE 102013010449
(43) Veröffentlichungstag der Anmeldung: 27.04.2016
(73) Patentinhaber: Audi AG, 85045 Ingolstadt (DE)
(72) Erfinder: GEISSENHOENER, Martin, 85055 Ingolstadt (DE)
(74) Vertreter: Brandt, Kai
(86) Internationale Anmeldenummer: PCT/EP2014/001639
(87) Internationale Veröffentlichungsnummer: WO 2014/202204

(56) Entgegenhaltungen:
- EP-A1- 2 688 267
- DE-A1-102004 004 302
- US-A1- 2013 151 037

## Beschreibung

Die Erfindung betrifft ein Verfahren zum Fernaktivieren einer klimatisierenden Funktion eines Kraftfahrzeugs gemäß dem Oberbegriff des Patentanspruchs 1 und ein auf einem mobilen Kommunikationsgerät ausführbares Computerprogrammprodukt gemäße dem Oberbegriff des Patentanspruchs 6.

Bei Fahrzeugen mit Remotestart, d.h. solchen, bei denen der Motor über eine Funkfernbedienung oder eine App gestartet werden kann, beispielsweise um das Fahrzeug vorzuklimatisieren, muss sichergestellt werden, dass sich das Fahrzeug dabei in einer sicheren Umgebung befindet. Beispielsweise wäre ein Remotestart besonders sicherheitskritisch, wenn sich das Fahrzeug in einem geschlossenen Raum, wie einer Garage befindet, da aufgrund der entstehenden Abgase eine gesundheitliche Beeinträchtigung von Personen, die die Garage betreten, besteht.

Die DE 10 2012 014 478 A1 beschreibt ein Verfahren zum Starten eines Motors eines Fahrzeugs durch Übermitteln eines Start-Signals durch eine mobile Kommunikationseinheit an eine im Fahrzeug vorhandene Kommunikationseinheit. Dabei wird zuvor ein Zustand der Umgebung des Fahrzeugs ermittelt und der Motor abhängig von dem ermittelten Zustand der Umgebung gestartet. Das Fahrzeug umfasst dabei ein Sensorsystem, mit welchem z.B. die CO2-Konzentration der Umgebung bestimmt oder festgestellt werden kann, ob dass Fahrzeug in einem abgeschlossenen Raum ist und welches Volumen dieser Raum hat. Als Sensoren können dabei Kameras oder Ultraschallsensoren vorgesehen sein. Es können auch Informationen berücksichtigt werden, die aus Datenquellen, z.B. via mobilem Internet, auf Basis einer bekannten Position bekannt sind. Beispielsweise kann durch ein Abreißen des GPS-Empfangs zusammen mit langsamer Fahrt die Einfahrt in eine überdachte Garage detektiert werden. Die gefahrene Strecke nach dem GPS Empfangsverlust, z.B. ermittelt über die Raddrehsensoren, kann in ein Mindestraumvolumen umgerechnet werden oder es können mittels der Navigationsdatenbank positionsbasiert Parkhäuser oder Garagen ermittelt werden.

Ein derartiges Verfahren ist jedoch relativ aufwendig, insbesondere was den Mess- und Berechnungsaufwand betrifft. Zudem sind solche Verfahren auch relativ ungenau und basieren auf Schätzungen, wie beispielsweise die Bestimmung des Mindestvolumens. Auch das Zurückgreifen auf eine Navigationsdatenbank ist nicht zufriedenstellend, da üblicherweise nicht alle Parkhäuser und vor allem nicht alle Garagen oder andere geschlossene Räume in einer solchen abgelegt sind.

Weitere aus dem Stand der Technik bekannte Verfahren sehen vor, die Remotestartlaufzeit des Motors zu beschränken, insbesondere auf sehr kurze Laufzeiten, wie maximal 10 Minuten, und einen solchen Remotestart pro Standphase des Kraftfahrzeugs nur maximal zweimal zuzulassen. Dies schränkt jedoch den Klimatisierungskomfort extrem ein, da aufgrund der kurzen Remotestartlaufzeiten gewünschte Zieltemperaturen nur selten erreicht werden.

Die EP 2 688 267 A1 beschreibt ein Verfahren und eine Vorrichtung zur Fernkommunikation eines Kraftfahrzeugs mit einer externen Kommunikationseinheit, umfassend eine Luftschnittstelle und eine Sensorik, wobei über die Luftschnittstelle Daten der Sensorik des Kraftfahrzeugs an die Kommunikationseinheit übertragbar sind und mittels der Sensorik ein äußeres Umfeld des Kraftfahrzeugs erfasst wird.

Es ist eine Aufgabe der Erfindung, ein Verfahren zum Fernaktivieren einer klimatisierenden Funktion eines Kraftfahrzeugs und ein auf einem mobilen Kommunikationsgerät ausführbares Computerprogrammprodukt bereitzustellen, welche die Fernaktivierung einer klimatisierenden Funktion auf einfache und sichere Weise ermöglichen.

Diese Aufgabe wird gelöst durch ein Verfahren und ein Computerprogrammprodukt gemäß den unabhängigen Ansprüchen. Vorteilhafte Ausgestaltungen der Erfindung finden sich in den abhängigen Ansprüchen.

Das erfindungsgemäße Verfahren zum Fernaktivieren einer klimatisierenden Funktion eines Kraftfahrzeugs durch ein mobiles Kommunikationsgerät, wobei das Kraftfahrzeug eine Empfangseinrichtung als Teil einer Kommunikationseinrichtung aufweist, die dazu ausgelegt ist, mit dem mobilen Kommunikationsgerät drahtlos zu kommunizieren, umfasst dabei die Schritte:
a) Senden eines Aktivierungs-Signals mittels eines mobilen Kommunikationsgeräts an eine Empfangseinrichtung des Kraftfahrzeugs;
b) Empfangen des Aktivierungs-Signals durch die Empfangseinrichtung des Kraftfahrzeugs;
c) Ermitteln eines aktuellen Standorts durch eine Standortsbestimmungseinrichtung des Kraftfahrzeugs;
d) Unter der Voraussetzung, dass das Aktivierungs-Signal durch die Empfangseinrichtung in Schritt b) empfangen worden ist, Übermitteln einer Information über den ermittelten Standort, die eine Positionsinformation über den ermittelten Standort darstellt, vom Kraftfahrzeug an das mobile Kommunikationsgerät und Anzeigen des Standorts des Kraftfahrzeugs dem Benutzer auf einer Anzeigeeinrichtung des mobilen Kommunikationsgeräts; und
e) Aktivieren der klimatisierenden Funktion des Kraftfahrzeugs, falls von der Empfangseinrichtung ein vom mobilen Kommunikationsgerät gesendetes Bestätigungs-Signal empfangen wurde, wobei das Bestätigungs-Signal vom mobilen Kommunikationsgerät nur gesendet wird, wenn zumindest die Bedingung, dass die Positionsinformation über den Standort des Kraftfahrzeugs an das mobile Kommunikationsgerät übermittelt worden ist, erfüllt ist.

Die klimatisierende Funktion ist dabei insbesondere als eine Funktion des Kraftfahrzeugs zu verstehen, die ein Heizen und/oder Kühlen des Kraftfahrzeugs, oder nur eines Bereichs des Kraftfahrzeugs, wie des Innenraums, der Fahrgastzelle und/oder des Kofferraums und/oder anderer Teilbereiche des Kraftfahrzeugs bewirkt. Beispielsweise kann das Aktivieren der klimatisierenden Funktion ein Aktivieren der Klimaanlage und/oder der Standheizung des Kraftfahrzeugs darstellen.

Durch das erfindungsgemäße Verfahren wird die klimatisierende Funktion also nicht sofort aktiviert, wenn von der Empfangseinrichtung das Aktivierungssignal empfangen wurde, sondern es ist zum Aktivieren der Funktion ein weiteres Empfangen eines Bestätigungs-Signals erforderlich, wodurch die Sicherheit bei der Fernaktivierung der Funktion erhöht werden kann. Weiterhin wird die Information über den Standort des Kraftfahrzeug an das mobile Kommunikationsgerät übermittelt, bevor ein Bestätigungs-Signal vom mobilen Kommunikationsgerät gesendet werden kann. Dadurch ist es also möglich, den Benutzer über den aktuellen Standort des Kraftfahrzeugs in Kenntnis zu setzen bevor die klimatisierende Funktion aktiviert wird. Gefährlichen Situationen, die aus einem Umparken des Kraftfahrzeugs durch einen anderen Benutzer entstehen können, kann so entgegengewirkt werden. Denn ein Umparken des Kraftfahrzeugs lässt sich durch den Benutzer anhand der auf das mobile Kommunikationsgerät übermittelten Information über den Standort entnehmen.

Darüber hinaus ist so auch die Möglichkeit für den Benutzer bereitgestellt, das Aktivieren der klimatisierenden Funktion zu verhindern oder abzubrechen. Aufgrund der übermittelten Standortinformation kann der Benutzer des Weiteren selbst beurteilen, ob es sich bei dem Standort des Fahrzeugs um eine sichere Umgebung handelt. Sieht ein Benutzer beispielsweise, dass der aktuelle Standort dem Standort entspricht, an dem er das Kraftfahrzeug selbst abgestellt hat, so kann der Benutzer selbst beurteilen, ob es sich dabei um eine sichere Umgebung zum Aktivieren einer Funktion des Fahrzeugs handelt. Auch ein versehentliches Aktivieren einer Funktion kann so verhindert werden, insbesondere dadurch, dass eine einmalige Übermittlung eines Aktivierungs-Signals nicht ausreichend zum Aktivieren der Funktion ist, sondern noch ein zweites Bestätigungs-Signal erforderlich ist bevor die Funktion aktiviert werden kann. Insgesamt ist dieses Verfahren auch besonders einfach und mit sehr geringem technischen Aufwand umsetzbar, denn es müssen keine aufwendigen und komplexen Sensorsysteme vorgesehen werden und es muss auch kein aufwendiger Berechnungsaufwand getrieben werden, um den Zustand der Umgebung des Kraftfahrzeugs feststellen zu können. vor allem Sicherheitsrisiken aufgrund technischer Fehlinterpretationen in Bezug auf eine sichere Umgebung können so ebenfalls ausgeschlossen oder zumindest reduziert werden. Der Benutzer kann so auf vorteilhafte Weise in die Sicherheitsbeurteilung mit einbezogen werden. Der große Vorteil des Verfahrens ist, dass so das Wissen eines Benutzers über die Umgebung, an der er das Kraftfahrzeug abgestellt hat bzw. an der es abgestellt ist, genutzt werden kann, um eine, ggf. zusätzliche, Gefahreneinschätzung vom Benutzer vornehmen lassen zu können. Es können aber auch noch weitere Sicherheitskriterien vorgesehen werden, insbesondere kann auch das Senden des Bestätigungs-Signals von der Erfüllung weiterer Sicherheitskriterien abhängig sein.

Insbesondere ist die Empfangseinrichtung des Kraftfahrzeugs als Teil einer Kommunikationseinrichtung zu verstehen, die dazu ausgelegt ist mit dem mobilen Kommunikationsgerät drahtlos zu kommunizieren, insbesondere bidirektional. Zum Übermitteln der Information über den ermittelten Standort vom Kraftfahrzeug an das mobile Kommunikationsgerät kann dabei eine Sendeeinrichtung vorgesehen sein, die ebenfalls Teil der Kommunikationseinrichtung des Kraftfahrzeugs sein kann. Die Kommunikationsverbindung zwischen dem mobilen Kommunikationsgerät und der Kommunikationseinrichtung des Kraftfahrzeugs zur drahtlosen Kommunikation zwischen diesen beiden Instanzen kann dabei beispielsweise durch ein Mobilfunknetz bereitgestellt sein. Eine derartige Kommunikationsverbindung unterliegt dabei keinen Einschränkungen in Bezug auf ihre Reichweite und ist somit besonders vorteilhaft. Des Weiteren kann das mobile Kommunikationsgerät ein Handy, ein Smartphone oder auch ein Tablet-PC, Laptop, PDA und dergleichen sein. Weiterhin kann unter einer Standortbestimmungseinrichtung z.B. ein GPS-Gerät bzw. ein GPS-Empfänger verstanden werden. Es können auch andere Geräte zum Empfangen von Positionsdaten, insbesondere durch satellitenbasierte Systeme, als Standortsbestimmungseinrichtung vorgesehen sein.

Des Weiteren sind das Aktivierungs-Signal und das Bestätigungs-Signal als zwei voneinander verschiedene Signale anzusehen, die sich insbesondere in ihrem Informationsgehalt unterscheiden. Die Empfangseinrichtung ist dabei insbesondere dazu ausgelegt, das Aktivierungs-Signal und das Bestätigungs-Signal zu unterscheiden, wie beispielsweise an ihrem Informationsgehalt. Der Empfang des Aktivierungs-Signals ist dabei bevorzugt Vorraussetzung und mittelbarer oder unmittelbarer Auslöser für die Übermittlung der Information über den Standort des Kraftfahrzeugs. Der Empfang des Bestätigungs-Signal durch die Empfangseinrichtung ist bevorzugt Vorraussetzung und/oder Auslöser zum Aktivieren der Funktion des Kraftfahrzeugs.

Bei einer vorteilhaften Ausgestaltung der Erfindung wird die an das mobile Kommunikationsgerät übermittelte Information über den ermittelten Standort des Kraftfahrzeugs durch das mobile Kommunikationsgerät auf einer Anzeigeeinrichtung des mobilen Kommunikationsgeräts angezeigt. Insbesondere können unter einer Information über den ermittelten Standort (Geo-)Koordinaten des Standorts verstanden werden. Die Anzeige kann dabei in akustischer Form, wie beispielsweise einer Sprachausgabe, erfolgen und/oder auch in optischer Form. Besonders vorteilhaft ist dabei eine Anzeige in Form von Bilddaten, beispielsweise als Darstellung des Standorts des Kraftfahrzeugs auf einer geographischen Karte und/oder einer Straßenkarte.

Auf diese Weise kann einem Benutzer der Standort des Kraftfahrzeugs besonders leicht erfassbar mitgeteilt werden.

Bei einer weiteren vorteilhaften Ausgestaltung der Erfindung wird nach Schritt d) und nach Empfangen der übermittelten Information über den ermittelten Standort durch das Kommunikationsgerät von diesem eine Bestätigungsaufforderung an den Benutzer ausgegeben. Diese Bestätigungsaufforderung kann dabei einer Aufforderung zu einer Bestätigung der Aktivierung der Funktion sein und/oder zur Bestätigung, dass sich das Kraftfahrzeug in einer sicheren Umgebung und/oder im Freien und/oder nicht in einem abgeschlossenen Raum befindet und/oder eine Bestätigung, dass der Benutzer das Kraftfahrzeug am angezeigten Standort abgestellt hat. Durch die Ortungsinformation, die als Information des Standorts des Kraftfahrzeugs bereitgestellt ist, zusammen mit dieser Bestätigungsaufforderungen kann ein Benutzer auf mögliche Gefahren und/oder Risiken aufmerksam gemacht werden, beispielsweise darauf, dass das Kraftfahrzeug von einer anderen Person umgeparkt wurde oder sogar gerade in Benutzung ist, oder dass es in der Garage abgestellt wurde usw.. Der Benutzer entscheidet somit bewusst und im Wissen über den Standort des Kraftfahrzeugs ob die Funktion aktiviert werden soll bzw. kann oder nicht.

Bei einer weiteren vorteilhaften Ausgestaltung der Erfindung sendet das mobile Kommunikationsgerät im Falle einer Bestätigungseingabe des Benutzers mittels des mobilen Kommunikationsgeräts das Bestätigungs-Signal an das Kraftfahrzeug. Durch die erforderliche Bestätigungseingabe kann somit sichergestellt werden, dass der Benutzer Kenntnis vom aktuellen Standort des Kraftfahrzeugs hat, was Sicherheitsrisiken beim Fernaktivieren mindert.

Des Weiteren kann zum Aktivieren der Funktion ein Verbrennungsmotor des Kraftfahrzeugs eingeschaltet werden. Da gefährliche Situationen gerade bei der Fernaktivierung von klimatisierenden Funktionen entstehen können, die ein Einschalten des Verbrennungsmotors erfordern, wie beispielsweise das Aktivieren der Klimaanlage zum Temperieren des Kraftfahrzeugs, ist das beschriebenen Verfahren gerade für die Aktivierung derartiger Funktionen aufgrund seiner hohen Sicherheit besonders vorteilhaft. Weiterhin kann die zu aktivierende Funktion auch die Aktivierung der Standheizung zum Beheizen des Kraftfahrzeugs darstellen. In diesem Fall muss der Verbrennungsmotor des Kraftfahrzeugs nicht eingeschaltet werden, jedoch entstehen auch beim Betrieb der Standheizung Abgase, die gesundheitsschädlich sind und ebenfalls Sicherheits- und Gesundheitsrisiken bergen können, falls die Standheizung in einem abgeschlossenen Raum betrieben wird. Durch die durch das Verfahren bereitgestellte Möglichkeit der einfachen Feststellung durch den Benutzer, ob sich das Kraftfahrzeug in einem geschlossenen Raum befindet, können auch in diesem Fall Sicherheitsrisiken vermieden werden.

Darüber hinaus ist es durch das Verfahren auch möglich, derartige Funktionen auch ausreichend lange aktiviert zu lassen, insbesondere bis das Kraftfahrzeug ausreichend klimatisiert ist oder bis zu einem Zeitpunkt der Benutzung klimatisiert bleibt. Durch die Bestätigungsabfrage an den Benutzer und dessen Bestätigungseingabe kann sichergestellt werden, dass sich das Fahrzeug in ausreichend sicherer Umgebung befindet, um die aktivierte Funktion auch für längere Zeit gefahrlos aktiviert zu lassen.

Das Weiteren kann es vorgesehen sein, dass nach dem Aktivieren der Funktion der Verbrennungsmotor für eine vorgegebene Zeitdauer eingeschaltet ist und die Funktion für die vorgegebene Zeitdauer ausgeführt wird. Dies ist besonders vorteilhaft bei einer Funktion zur Klimatisierung des Kraftwagens. Darüber hinaus kann auch eine vorgegebene Zeitdauer vorgesehen sein, nach welcher die Funktion wieder automatisch deaktiviert wird und insbesondere der Verbrennungsmotor wieder ausgeschaltet wird. Dies kann einen unnötigen Treibstoffverbrauch verhindern, beispielsweise für den Fall, dass ein Benutzer sich umentschieden hat und das Fahrzeug nicht benutzen möchte und dabei vergessen hat, dass er eine Funktion fernaktiviert hat. Die vorgegebenen Zeitdauer zum automatischen abschalten kann dabei deutlich länger bemessen sein als im Stand der Technik üblich, insbesondere so lang, dass auch bei extremen Außentemperaturen eine ausreichende Klimatisierung des Kraftfahrzeugs während dieser Zeitdauer möglich ist. Alternativ oder zusätzlich zum Vorsehen einer vorgegebenen Zeitdauer bis zum automatischen Abschalten des Verbrennungsmotors oder der Deaktivierung der Funktion kann es auch vorgesehen sein, durch das mobile Kommunikationsgerät ein Erinnerungssignal, beispielsweise ein akustisches Signal, wie einen Warnton, ausgeben zu lassen, wenn innerhalb einer vorbestimmten Zeitdauer keine Benutzung des Kraftfahrzeugs stattgefunden hat. Darüber hinaus müssen aus Sicherheitsgründen keine Beschränkungen mehr vorgesehen werden, was die Häufigkeit der Fernaktivierung einer Funktion während einer Standphase betrifft. Beispielsweise kann es vorgesehen sein, dass eine Fernaktivierung einer oder auch mehrerer Funktionen eines Kraftfahrzeugs während einer Standphase, d.h. ohne dass das Kraftfahrzeug in der Zwischenzeit bewegt und/oder gefahren und/oder geöffnet und/oder auf irgend eine andere Weise benutzt wurde, beliebig oft aktivieret werden kann. Somit können auf vorteilhafte Weise dem Benutzer aus Sicherheitsgründen auferlegte Einschränkungen reduziert oder auch ganz darauf verzichtet werden, und gleichzeitig eine sichere Fernaktivierung einer Funktion ermöglicht werden.

Das erfindungsgemäße auf einem mobilen Kommunikationsgerät ausführbare Computerprogrammprodukt veranlasst beim Ausführen auf einem mobilen Kommunikationsgerät zum Aktivieren einer klimatisierenden Funktion eines Kraftfahrzeugs das mobile Kommunikationsgerät, ein Aktivierungssignal zum Anfordern einer Information über einen Standort des Kraftfahrzeugs, die eine Positionsinformation über den Standort darstellt, an eine Empfangseinrichtung des Kraftfahrzeugs zu senden und im Falle eines Empfanges der angeforderten Information über den Standort des Kraftfahrzeugs in Abhängigkeit eines Erfüllt-Seins eines vorbestimmten Kriteriums des Standorts ein Bestätigungs-Signal zum Aktivieren der klimatisierenden Funktion an die Empfangseinrichtung des Kraftfahrzeugs zu senden, wobei das Bestätigungs-Signal vom mobilen Kommunikationsgerät nur gesendet wird, wenn zumindest die Bedingung, dass die Positionsinformation über den Standort des Kraftfahrzeugs an das mobile Kommunikationsgerät übermittelt worden ist, erfüllt ist.

Das vorbestimmte Kriterium des Standorts kann dabei sein, dass der Benutzer das Kraftfahrzeug selbst an diesem Standort abgestellt hat oder der Standort in Bezug auf die zu aktivierende Funktion sicher ist oder lediglich, dass der Benutzer Kenntnis vom Standort des Kraftfahrzeugs hat. Das Erfüllt-Sein dieser möglichen Kriterien kann beispielsweise durch eine Benutzereingabe am mobilen Kommunikationsgerät bestätigt werden.

Das vorbestimmte Kriterium kann dabei eine durch einen Benutzer erforderliche Eingabe sein und/oder kann auch das Erfüllt-Sein weiterer Sicherheitskriterien, die beispielsweise auch die Standortsinformation des Kraftfahrzeugs betreffen können, darstellen.

Insbesondere kann das Computerprogrammprodukt dazu ausgebildet sein, das mobile Kommunikationsgerät zur Durchführung der Verfahrensschritte zu veranlassen, die im Zusammenhang mit dem erfindungsgemäßen Verfahren und seinen Ausgestaltungsmöglichkeiten beschrieben wurden und die durch das mobile Kommunikationsgerät ausgeführt werden.

Das Computerprogrammprodukt, das beispielsweise als eine auf einem mobilen Kommunikationsgerät installierbare App bzw. Anwendungsprogramm ausgeführt sein kann, ermöglicht bei Ausführung auf dem mobilen Kommunikationsgerät somit die Fernaktivierung einer klimatisierenden Funktion eines Kraftfahrzeugs gemäß dem erfindungsgemäßen Verfahren und seinen Ausgestaltungen auf besonders vorteilhafte Weise.

Alle Merkmale, Ausgestaltungen und deren Vorteile, die im Zusammenhang mit dem erfindungsgemäßen Verfahren beschrieben wurden, gelten in gleicher Weise, soweit anwendbar, auch für das erfindungsgemäße Computerprogrammprodukt.

Die vorstehend in der Beschreibung genannten Merkmale und Merkmalskombinationen sowie die nachfolgend in der Figurenbeschreibung genannten oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

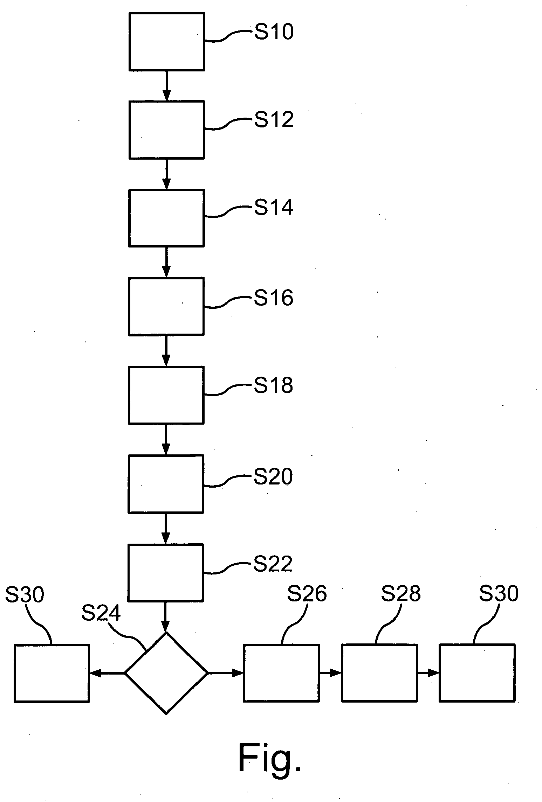

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Dabei zeigt die einzige Figur ein Ablaufdiagramm eines Ausführungsbeispiels des erfindungsgemäßen Verfahrens zur Fernaktivierung einer Funktion eines Kraftfahrzeugs. Möchte ein Benutzer sein Kraftfahrzeug demnächst benutzen und beispielsweise das Kraftfahrzeug aus der Ferne vorklimatisieren, z.B. beheizen oder kühlen, so kann er über eine entsprechenden Eingabe an einem mobilen Kommunikationsgerät in Schritt S10 das Senden eines Aktivierungssignals in Schritt S12 durch das mobile Kommunikationsgerät an das Kraftfahrzeug zum Aktivieren der betreffenden Funktion veranlassen. Das mobile Kommunikationsgerät kann dabei ein Smartphone, ein Handy, ein Laptop, PDA, Tablet-PC, usw. sein und weist dabei bevorzugt ein Display, akustische Ausgabemöglichkeiten und/oder auch akustische Eingabemöglichkeite und/oder andere Eingabemöglichkeiten, wie Tasten, einen Touchscreen, usw. auf.

Wird in Schritt S14 dieses Aktivierungs-Signal von einer Empfangseinrichtung des Kraftfahrzeugs empfangen, so wird in Schritt S16 die Position des Kraftfahrzeugs durch eine Standortbestimmungseinrichtung des Kraftfahrzeugs ermittelt und an das mobile Kommunikationsgerät in Schritt S18 gesendet. Die Standortbestimmungseinrichtung kann z.B. als GPS-Gerät bzw. als GPS-Empfänger ausgebildet sein oder auch als ein anderes Gerät bzw. System zur Positionsbestimmung. Der Standort kann dabei auch bereits vorher ermittelt worden sein. Beispielsweise kann es auch vorgesehen sein, dass der Standort der Kraftfahrzeugs bei jeder Beendigung einer Fahrt ermittelt und abgespeichert wird. Wird dann das Aktivierungs-Signal von der Empfangseinrichtung des Kraftfahrzeugs empfangen, kann daraufhin der abgespeicherte aktuelle Standort an das mobile Kommunikationsgerät übermittelt werden. Die Kommunikation zwischen dem Kraftfahrzeug und dem mobilen Kommunikationsgerät kann dabei beispielsweise über ein Mobilfunknetz erfolgen. Ist nun die Information, insbesondere die geographische Information bzw. Positionsinformation, über den Standort des Kraftfahrzeugs an das mobile Kommunikationsgerät übermittelt worden, so wird in Schritt S20 der Standort des Kraftfahrzeugs auf einer Anzeigeeinrichtung des mobilen Kommunikationsgeräts dem Benutzer angezeigt. Diese Anzeige kann dabei in Form einer Darstellung des Standorts des Kraftfahrzeugs auf einer Karte erfolgen. Somit sieht der Benutzer nun, wo sich das Kraftfahrzeug befindet. Befindet es sich an einem Ort, an dem er es selbst abgestellt hat, so kann der Benutzer beurteilen, ob die Umgebung dieses Ortes dazu geeignet ist, gefahrlos die Funktion aktivieren zu können. So kann nun in Schritt S22 abgefragt werden, ob der Benutzer auf Basis der ihm nun mitgeteilten Standortinformation die Funktion aktivieren möchte bzw. es kann vom mobilen Kommunikationsgerät eine Bestätigungsaufforderung an den Benutzer ausgegeben werden, die eine Bestätigung des Benutzers einfordert, bevor die Funktion aktiviert werden kann. Wird in Schritt S24 diese Betätigung durch den Benutzer erteilt, beispielsweise durch eine zur Bestätigung erforderliche Eingabe über das mobile Kommunikationsgerät, so wird vom mobilen Kommunikationsgerät ein Bestätigungs-Signal an das Kraftfahrzeugs gesendet. Wird in Schritt S28 dieses Bestätigungssignal von der Empfangseinrichtung des Kraftfahrzeugs empfangen, so veranlasst eine Steuereinrichtung des Kraftfahrzeugs in Schritt S30 die Aktivierung der Funktion.

Wird in Schritt S24 die Bestätigung durch den Benutzer verweigert, so wird in Schritt S32 das Verfahren beendet. Beispielsweise kann dies der Fall sein, wenn der Benutzer auf Basis der ihm auf das mobile Kommunikationsgerät übermittelten Information über den Standort des Kraftfahrzeugs feststellt, dass er das Kraftfahrzeug nicht selbst dort geparkt hat und somit nicht weiß, ob die Umgebung dieses Ortes in Bezug auf die Aktivierung der Funktion sicher ist. Oder er stellt fest, dass das Kraftfahrzeug, ob von ihm selbst oder einem weiteren Benutzer, in einer Garage geparkt wurde. Somit kann der Benutzer die Aktivierung der Funktion verhindern und Sicherheitsrisiken vermeiden. Zum Abbruch des Verfahren kann es beispielsweise auch vorgesehen sein, dass der Benutzer eine Abbruchseingabe am mobilen Kommunikationsgerät tätigt, woraufhin ein Abbruch-Signal an das Kraftfahrzeug übermittelt wird und das Kraftfahrzeug den Abbruch des Verfahrens veranlasst und damit keine Aktivierung der Funktion bewirkt. Es kann auch vorgesehen sein, dass zum Abbruch des Verfahrens keine Eingabe durch den Benutzer erforderlich ist und dieses beispielsweise automatisch abgebrochen wird, wenn nach einer vorbestimmten Zeitdauer kein Bestätigungs-Signal von der Empfangseinrichtung des Kraftfahrzeugs empfangen wird.

## Patentansprüche

1. Verfahren zum Fernaktivieren einer klimatisierenden Funktion eines Kraftfahrzeugs durch ein mobiles Kommunikationsgerät, wobei das Kraftfahrzeug eine Empfangseinrichtung als Teil einer Kommunikationseinrichtung aufweist, die dazu ausgelegt ist, mit dem mobilen Kommunikationsgerät drahtlos zu kommunizieren, mit den Schritten:
a) Senden eines Aktivierungs-Signals mittels eines mobilen Kommunikationsgeräts an eine Empfangseinrichtung des Kraftfahrzeugs (S12);
b) Empfangen des Aktivierungs-Signals durch die Empfangseinrichtung des Kraftfahrzeugs (S14);
**gekennzeichnet durch** die Schritte:
c) Ermitteln eines aktuellen Standorts durch eine Standortsbestimmungseinrichtung des Kraftfahrzeugs (S16);
d) Unter der Voraussetzung, dass das Aktivierungs-Signal durch die Empfangseinrichtung in Schritt b) empfangen worden ist, Übermitteln einer Positionsinformation über den ermittelten Standort vom Kraftfahrzeug an das mobile Kommunikationsgerät (S18) und Anzeigen des Standorts des Kraftfahrzeugs dem Benutzer auf einer Anzeigeeinrichtung des mobilen Kommunikationsgeräts (S20); und
e) Aktivieren der klimatisierenden Funktion des Kraftfahrzeugs (S30), falls von der Empfangseinrichtung ein vom mobilen Kommunikationsgerät gesendetes Bestätigungs-Signal (S26) empfangen wurde (S28), wobei das Bestätigungs-Signal vom mobilen Kommunikationsgerät nur gesendet wird, wenn zumindest die Bedingung, dass die Positionsinformation über den Standort des Kraftfahrzeugs an das mobile Kommunikationsgerät übermittelt worden ist, erfüllt ist.

2. Verfahren nach Anspruch 1 ,
**dadurch gekennzeichnet, dass**
nach Schritt d) und nach Empfangen der übermittelten Positionsinformation über den ermittelten Standort durch das Kommunikationsgerät von diesem eine Bestätigungsaufforderung an den Benutzer ausgegeben wird (S22).

3. Verfahren nach Anspruch 2,
**dadurch gekennzeichnet, dass**
im Falle einer Bestätigungseingabe des Benutzers (S24) am mobilen Kommunikationsgerät dieses das Bestätigungs-Signal an das Kraftfahrzeug sendet (S26).

4. Verfahren nach einem der vorhergehenden Ansprüche,
**dadurch gekennzeichnet, dass**
zum Aktivieren der Funktion ein Verbrennungsmotor des Kraftfahrzeugs eingeschaltet wird.

5. Verfahren nach Anspruch 4,
**dadurch gekennzeichnet, dass**
nach dem Aktivieren der Funktion (S30) der Verbrennungsmotor für eine vorgegebene Zeitdauer eingeschaltet ist und die Funktion für die vorgegebene Zeitdauer ausgeführt wird.

6. Auf einem mobilen Kommunikationsgerät ausführbares Computerprogrammprodukt,
**dadurch gekennzeichnet, dass**
das Computerprogrammprodukt beim Ausführen auf einem mobilen Kommunikationsgerät zum Aktivieren einer klimatisierenden Funktion eines Kraftfahrzeugs das mobile Kommunikationsgerät veranlasst, ein Aktivierungssignal zum Anfordern einer Positionsinformation über einen Standort des Kraftfahrzeugs an eine Empfangseinrichtung eines Kraftfahrzeugs zu senden (S12) und im Falle eines Empfanges der angeforderten Positionsinformation über den Standort des Kraftfahrzeugs den Standort des Kraftfahrzeugs auf einer Anzeigeeinrichtung des mobilen Kommunikationsgeräts dem Benutzer anzuzeigen und in Abhängigkeit eines Erfüllt-Seins eines vorbestimmten Kriteriums des Standorts ein Bestätigungs-Signal zum Aktivieren der klimatisierenden Funktion an die Empfangseinrichtung des Kraftfahrzeugs zu senden (S26), wobei das Bestätigungs-Signal vom mobilen Kommunikationsgerät nur gesendet wird, wenn zumindest die Bedingung, dass die Positionsinformation über den Standort des Kraftfahrzeugs an das mobile Kommunikationsgerät übermittelt worden ist, erfüllt ist.

## Claims

1. Method for remotely activating an air-conditioning function of a motor vehicle by way of a mobile communication device, wherein the motor vehicle has a receiver device as part of a communication device which is configured to wirelessly communication with the mobile device, having the steps:
a) sending an activation signal by means of a mobile communication device to a receiver device of the motor vehicle (S12);
b) receiving the activation signal by way of the receiver device of the motor vehicle (S14);
**characterised by** the steps:
c) determining a current location by way of a location determination device of the motor vehicle (S16);
d) with the requirement that the activation signal has been received by the receiver device in step b), transmitting a position information item regarding the determined location of the motor vehicle to the mobile communication device (S18) and displaying the location of the motor vehicle to the user on a display device of the mobile communication device (S20); and
e) activating the air-conditioning function of the motor vehicle (S30) if an actuation signal (S26) sent from the mobile communication device has been received by the receiver device (S28), wherein the actuation signal is only sent from the mobile communication device if at least the condition is met whereby the position information regarding the location of the motor vehicle has been transmitted to the mobile communication device.

2. Method according to claim 1,
**characterised in that**
after step d) and after receiving the transmitted position information regarding the determined location by way of the communication device, an actuation request is issued to the user from said communication device (S22).

3. Method according to claim 2,
**characterised in that**
in the event of an actuation input by the user (S24) on the mobile communication device, said mobile communication device sends the actuation signal to the motor vehicle (S26).

4. Method according to any one of the preceding claims,
**characterised in that**
a combustion engine of the motor vehicle is turned on to activate the function.

5. Method according to claim 4,
**characterised in that**
after activating the function (S30), the combustion engine is turned on for a predefined duration and the function is implemented for the predefined duration.

6. Computer program product that can be executed on a mobile communication device,
**characterised in that**
the computer program product, upon execution on a mobile communication device to activate an air-conditioning function of a motor vehicle, causes the mobile communication device to send an activation signal to request a position information item regarding a location of the motor vehicle to a receiver device of a motor vehicle (S12) and in the event of receiving the requested position information regarding the location of the motor vehicle, it causes the location of the motor vehicle to be displayed to the user on a display device of the mobile communication device and to send an actuation signal to activate the air-conditioning function to the receiver device of the motor vehicle depending upon the fulfilment of a predetermined criterion of the location (S26), wherein the actuation signal is only sent from the mobile communication device when at least the condition is met whereby the position information regarding the location of the motor vehicle has been transmitted to the mobile communication device.

## Revendications

1. Procédé servant à activer à distance une fonction de climatisation d'un véhicule automobile par un appareil de communication mobile, dans lequel le véhicule automobile présente un dispositif de réception faisant partie d'un dispositif de communication, qui est configuré pour communiquer sans fil avec l'appareil de communication mobile, avec les étapes suivantes consistant à :
a) envoyer un signal d'activation au moyen d'un appareil de communication mobile à un dispositif de réception du véhicule automobile (S12) ;
b) recevoir le signal d'activation par le dispositif de réception du véhicule automobile (S14);
**caractérisé par** les étapes consistant à :
c) déterminer un emplacement instantané par un dispositif de définition d'emplacement du véhicule automobile (S16) ;
d) sous réserve que le signal d'activation ait été reçu par le dispositif de réception à l'étape b), transmettre une information de position concernant l'emplacement déterminé depuis le véhicule automobile à l'appareil de communication mobile (S18), et afficher l'emplacement du véhicule automobile à l'attention de l'utilisateur sur un dispositif d'affichage de l'appareil de communication mobile (S20) ; et
e) activer la fonction de climatisation du véhicule automobile (S30), si un signal de confirmation (S26) envoyé par l'appareil de communication mobile a été reçu par le dispositif de réception (S28), dans lequel le signal de confirmation est envoyé par l'appareil de communication mobile seulement quand au moins la condition, selon laquelle l'information de position concernant l'emplacement du véhicule automobile a été transmise à l'appareil de communication mobile, est remplie.

2. Procédé selon la revendication 1,
**caractérisé en ce que**
après l'étape d) et après la réception de l'information de position transmise concernant l'emplacement déterminé par l'appareil de communication, une demande de confirmation est émise à l'attention de l'utilisateur par celui-ci (S22).

3. Procédé selon la revendication 2,
**caractérisé en ce que**
dans le cas d'une saisie de confirmation de l'utilisateur (S24) au niveau de l'appareil de communication mobile, celui-ci envoie le signal de confirmation au véhicule automobile (S26).

4. Procédé selon l'une quelconque des revendications précédentes,
**caractérisé en ce que**
un moteur à combustion interne du véhicule automobile est démarré afin d'activer la fonction.

5. Procédé selon la revendication 4,
**caractérisé en ce que**
après l'activation de la fonction (S30), le moteur à combustion interne est démarré pour une durée spécifiée et la fonction est exécutée pendant la durée spécifiée.

6. Produit programme informatique pouvant être exécuté sur un appareil de communication mobile,
**caractérisé en ce que**
le produit programme informatique, lors de l'exécution sur un appareil de communication mobile, amène, afin d'activer une fonction de climatisation du véhicule automobile, l'appareil de communication mobile à envoyer un signal d'activation servant à demander une information de position concernant un emplacement du véhicule automobile à un dispositif de réception d'un véhicule automobile (S12) et à afficher à l'attention de l'utilisateur l'emplacement du véhicule automobile sur un dispositif d'affichage de l'appareil de communication mobile en cas de réception de l'information de position demandée concernant l'emplacement du véhicule automobile et à envoyer, en fonction d'une satisfaction d'un critère prédéfini de l'emplacement, un signal de confirmation servant à activer la fonction de climatisation au dispositif de réception du véhicule automobile (S26), dans lequel le signal de confirmation est envoyé par l'appareil de communication mobile seulement si au moins la condition, selon laquelle l'information de position concernant l'emplacement du véhicule automobile a été transmise à l'appareil de communication mobile, est remplie.
